# EUROPEAN PATENT SPECIFICATION

(11) **EP 3 056 746 B1**
(45) Date of publication and mention of the grant of the patent: **10.04.2019**
(21) Application number: 16155459.7
(22) Date of filing: 12.02.2016
(51) Int. Cl.: F16B 11/00, F16B 5/01

(54) **METHOD FOR THE APPLICATION OF METALWARE TO HOLLOW-CORED WOOD PANELS AND STRUCTURE OF INSERTS FOR THE IMPLEMENTATION OF SAID METHOD**
METHODE ZUM AUFBRINGEN VON METALLTEILEN AUF HOHLKERN-HOLZPANELE UND STRUKTUR VON EINSÄTZEN ZUR DURCHFÜHRUNG DES VERFAHRENS
PROCÉDÉ D'APPLICATION DE PIÈCES MÉTALLIQUES SUR DES PANNEAUX EN BOIS À NOYAUX CREUX ET STRUCTURE D'INSERTS POUR L'EXECUTION DU PROCÉDÉ

(30) Priority: 13.02.2015 IT PS20150002
(43) Date of publication of application: 17.08.2016
(73) Proprietor: G.P. Consulting di Giuseppe Pritelli & C. S.a.s., 47841 Cattolica (Rimini) (IT)
(72) Inventor: PRITELLI, Giuseppe, 47841 Cattolica, Rimini (IT)
(74) Representative: Gustorf, Gerhard

(56) References cited:
- EP-A1- 2 221 489
- EP-A2- 2 083 131
- EP-A2- 2 224 140
- WO-A2-2006/097518
- DE-U1-202007 013 800
- DE-U1-202008 001 093
- FR-A5- 2 089 571
- GB-A- 1 297 339
- GB-A- 2 421 556
- US-A1- 2002 050 105

## Description

### Field of the art

Sandwich panels, i.e. composite panel-like flat structures, comprising two thin sheets or boards made relatively high mechanical resistance material, mutually inter-spaced and rigidly connected through a structural adhesive to a connection element with lightness characteristics are known; such composite structures have considerably better static values with respect to the single constituent elements: the connection element is constituted by a light material with relatively low mechanical resistance which allows spacing the boards, intended for the distribution of the loads in the plane, wherein the connection element is intended to increase the flexural rigidity of the panel, which depends on the distance of the boards from the median plane.

Spacing the boards allows obtaining a considerable increase of rigidity with respect to a panel only constituted by a thickness made of the same material as the boards, with a slight increase of weight.

Sandwich panels, referred to as hollow core wood panels or honeycomb panels, particularly appreciated for their lightness, are commonly used in the furnishing industry; they are made up of two boards or plywood sheets, mdf (medium-density fibreboard) or wood chips, glued in a sandwich-like fashion by interposing a connection element made up of a honeycomb structure made of deformed aluminium sheets or paper material; alternatively, filling is carried out using amorphous material such as plastic expanded foams, wooden fibrous agglomerates or other low density materials, bound using resin ligands. In this specific furniture industry sector, the hollow core wood or honeycomb panel is then covered and edged prior to the application of metalware on the face and/or edge thereof, in the position contingently provided for by the implementation project for the relative assembly to other similar panels and elements constituting the furniture; the latter operation is particularly sensitive as regards the hollow core wood or honeycomb panels.

### Description of the specific technical problem

Though the aforementioned structure of the hollow core wood or honeycomb panels allows attaining light and inexpensive on the one hand, it implies a connatural interior hollowness that makes means for fastening the metalware used for solid panel structures or solid bodies such as mdf, wood chip and the like, unsuitable for the purpose without penetrating on the other hand.

More correctly, such conventional means are used when the hollow core wood or honeycomb panels have a perimeter cornice made as a solid block or surrogate, and/or when provided with special inserts made of solid material or surrogate and/or when the thickness of the boards allows such solution. In the latter case, the exclusively penetrating inserts are possibly twinned to overcome the weakness of the single element but they do not represent a definite solution.

Thus, the prior art provided for means specifically designed to attain the solidity excluded by interior hollowness of the hollow core wood panels thus requiring both external layers or boards to cooperate, by means of inserts capable of firmly joining thereto,

These inserts for fastening the boards according to the prior art are substantially of two types:
chemical inserts, which inserted into the holes drilled to accommodate them and forced thereinto break in preset pre-fracture positions and release bonding agents which react and adhere thus constraining them to the encountered boards;
ultrasonic inserts, or inserts made of plastic material with knurled surfaces which, provided with sonotrodes, melt on the aforementioned rough surfaces pressing against the boards and thus are joined thereto solidifying.

It is obvious that such solutions according to the prior art are rather sophisticated and difficult to utilise, thus complicating the application of metalware hence considerably limiting the use of hollow core wood or honeycomb panels in the furnishing industry though having optimal characteristics for use in the industry.

A further solution is illustrated in EP2 224 140A2 which provides for the application of glue on the inserts and a plurality of systems for the relative application. However, the structure of the inserts and the positioning of the adhesive material in this solution does not offer satisfactory solutions.

### Objects of the invention

Thus, in this context, the main object of the present invention is to provide an innovative and practical system for applying the support metalware, mounting and maintenance of the hollow core wood or honeycomb panels with specific reference to the furnishing industry.

Another object of the present invention is to attain the previous object through a system capable of attaining a satisfactory resistance.

Another object of the present invention is to attain the previous objects through a system capable of allowing the use of support metalware, mounting and maintenance according to the prior art.

Still, another object of the present invention is to attain the previous objects through a system capable of allowing implementation thereof on lines for the production of hollow core wood or honeycomb panels for the furnishing industry according to the prior art, without radically intervening on the process as a whole.

Another object of the present invention is to attain the previous objects through a system capable of allowing polyvalence for dimensions of the inserts and panels, reducing the overall dimensions, adjustability of the actuation parameters, instant results, reducing energy consumption and dispersion, modularity as regards alternative applications, simplicity in terms of maintenance and interchangeability.

Still, a further object of the present invention is to attain any one of the previous objects through a system that is simple and efficient, safe to use and relatively inexpensive considering the actual results attained therewith.

### Summary of the solution concept

These and other objects are attained through the method and inserts for the application of metalware to hollow-cored wood panels in the industrial production of furniture as set forth in claims 1 and 4.

### Description of the attached drawings

Further characteristics and advantages of the method and structure for applying metalware to hollow core wood panels according to the present invention shall be more apparent from the following detailed description of a preferred but non-exclusive embodiment thereof, represented solely by way of non-limiting example with reference to the attached drawings, wherein:
Figure 1 shows - in a top perspective view - three examples of embodiments of inserts for implementing the method according to the present invention;
Figure 2 shows - in a bottom perspective view - the same three examples of embodiments of inserts for implementing the method according to the present invention;
Figures 3 and 4 show - in perspective views - a fourth embodiment of an insert for implementing the method according to the present invention, respectively exploded and assembled;

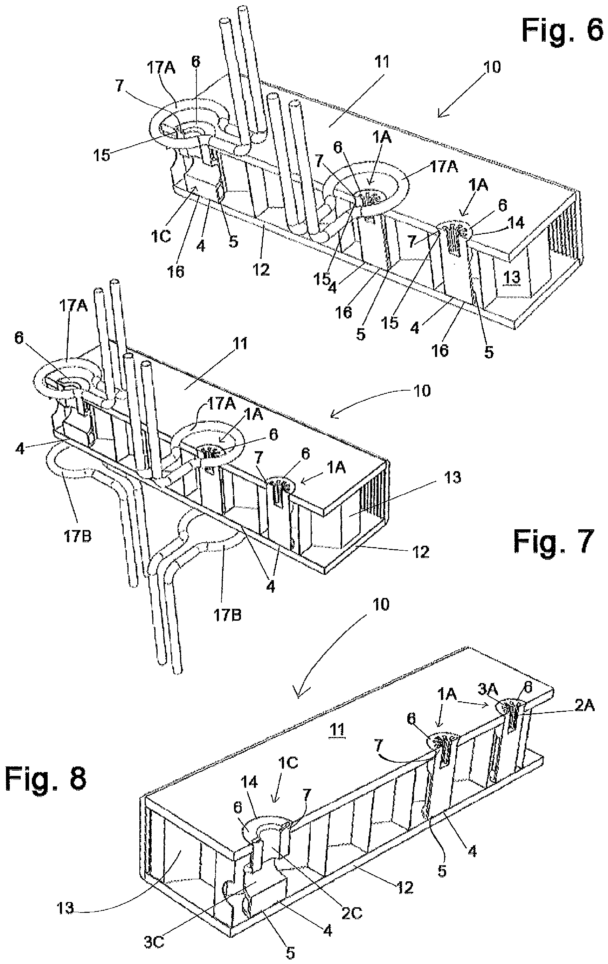

Figures 5, 6 and 7 show - in schematic perspective view - sections of the hollow core wood or honeycomb panels in the stage of implementing the method according to the present invention;

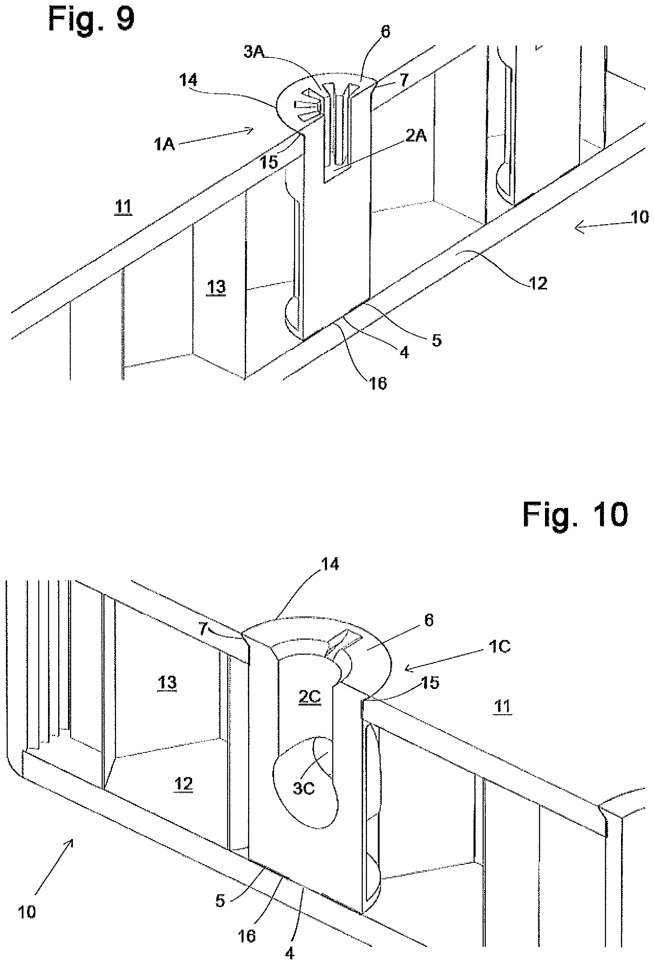

Figures 8, 9 and 11 show - in schematic perspective view - sections of the hollow core wood or honeycomb panels with application of the structure of the insert according to the present invention and
Figure 12 shows a section of the hollow core wood or honeycomb panels with application of a specific embodiment of the insert according to the present invention.

### Static description of the embodiments

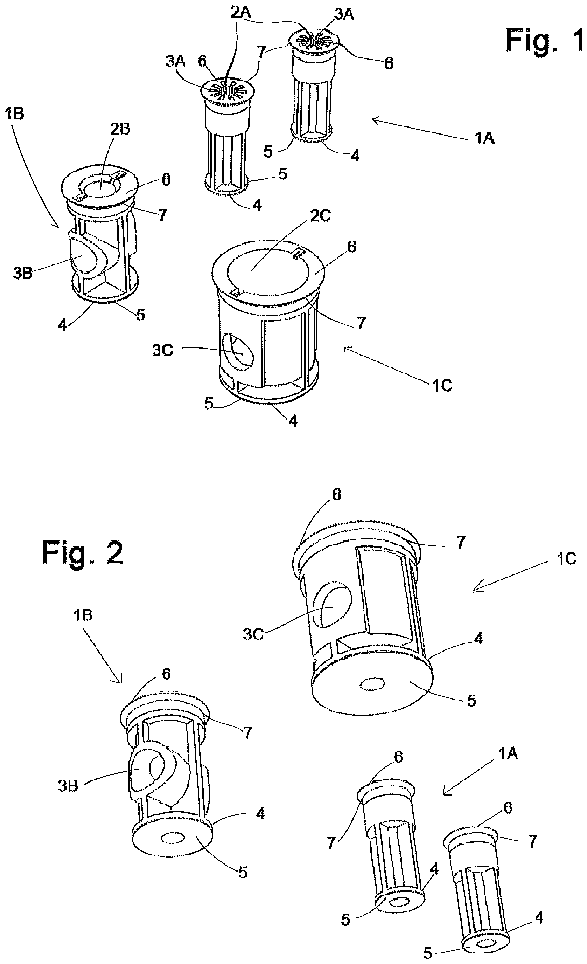

With reference to such figures, and in particular figures 1 and 2, three types of inserts for implementing the method according to the present invention, by way of example through preferably cylindrical and even more by way of example made of a zinc aluminium and magnesium alloy, are indicated with 1A, 1B and 1C.

The inserts 1A, 1B and 1C define respective interior cavities 2A, 2B and 2C, which - in the first 1A - is structured in a known manner with radial septa 3A to interact with screws and in the other two they are adapted to house traction eccentrics, conical screws, wedges and other known means and thus they are communicating with transversal holes 3B, 3C made on the jacket for the insertion of fasteners 8; more specifically, it should be observed that the, where required, the structuring of the inserts depending on the relative accessories, unless otherwise specified, is only performed by way of non-limiting example, in that the present invention mainly refers to the characterisation of the method for fastening the inserts to the structure thereof functional to the fastening of the same, regardless of the purpose and shape of the inserts in question.

The inserts 1 are structured with a distal base 4 and a proximal collar 6 shaped with an outward flare; at least one apical layer of heat-meltable 5 (for example thermoplastic) or heat-activatable adhesive material (for example thermoplastic or cross-linking by heat shock, etc). is associated to the distal base of said inserts 1; at least one top ring-like layer 7 made of the same heat-meltable or heat-activatable adhesive material is associated to the proximal flare or collar 6 of the inserts 1; however, as specified in the section dedicated to alternative embodiments, it should be understood that the insert may also be fully covered with adhesion material.

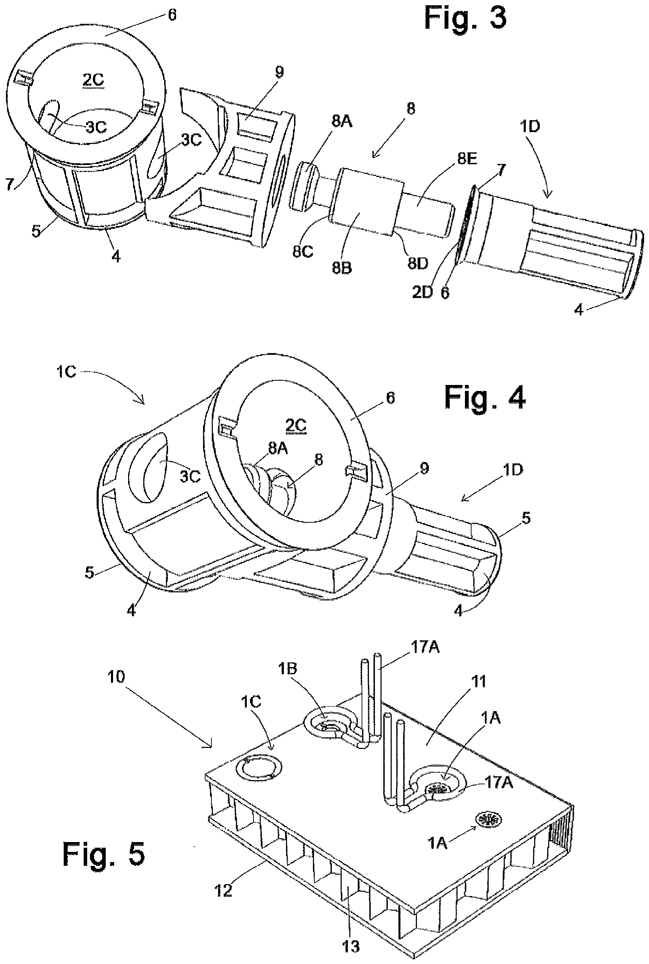

In figures 3 and 4, the insert 1C is illustrated associated to a fastening pin indicated in its entirety with 8, with a head 8A passing through the hole 3C by interposing a spacer 9, a median cylindrical expansion coaxial 8B defined by annular head 8C and foot 8D reliefs as well as a foot 8E, in turn coaxially inserted in the cavity 2D of a further insert 1D.

A panel of the sandwich type made of composite materials referred to as "hollow core wood" or "honeycomb", constituted by a sandwich of two wooden or surrogate wood boards 11 and 12 between which a honeycomb structure 13, preferably made of plastic or aluminium material, is interposed, is indicated in its entirety with 10.

In the panel, there are provided seats 14 for the inserts 1 constituted by blind holes 14 with flared opening 15, made on a board 11 on one side and in the interposed connection element 13 up to inside the other board 12 on the opposite side, preferably with an inner notch 16 of the latter 12;

Indicated with 17A are electromagnetic induction solenoids, to be deemed displaceable through suitable devices and mechanisms near the perforated face 11 of the hollow core wood or honeycomb panel 1 around the opening of the seats 14, for example and preferably when the panel lies on a conveyor adapted to translate a consecutive plurality thereof; for example and preferably downstream of a previous drilling station where the panel 1 and the seats 14 are obtained in a known manner.

Indicated with 17B are similar electromagnetic induction solenoids displaceable similarly arranged near the other face 12 of the panel 1, at the solenoids 16A.

Through the coil of the solenoids 16, means - deemed of the through type though not illustrated - for pressing the inserts 1 into the seats 14, also possibly suitable for the relative insertion into the seats 14, if not previously done in a station upstream, made of amorphous material and mechanised in any manner suitable for the purpose, for the implementation of the method according to the present invention as specified below.

### Dynamic description of embodiments

Thus, having completed the static description of preferred embodiments of the elements implementing the method and structure of inserts for applying metalware to hollow core wood panels according to the present invention, below is the dynamic description:
the method for applying metalware to hollow core wood panels according to the present invention may be preferably implemented through automatic devices driven or mechanised in any manner suitable for the purpose, controlled by a computerised logic and arranged at specicific positions along a conveyor line and step-by-step stationing of a series of panels 1; the line may be conceived immediately downstream of the line for producing hollow core wood or honeycomb panels 1.

In this context, the implementation of the method according to the present invention provides for:
inserts 1 preferably cylindrical, necessarily at least partly metallic, designed for interacting with screws, conical screws, fasteners, eccentric fasteners and with joining means with metalware and support, mounting and service accessories, structured with a distal base 4 and an external flaring 4 forming a proximal collar 6 with reference to the direction of insertion and
for every insert:
   providing at least one apical layer 5 of heat-meltable or heat-activatable adhesive material arranged on the distal base 4 of said insert 1, preferably firmly associated thereto;
   providing at least one top ring-like layer 7 of heat-meltable or heat-activatable adhesive material arranged beneath the proximal external flaring or collar 6 of said insert, preferably firmly associated thereto;
   creation, preferably automatic, of the seats 14 for the inserts 1, by perforating 14 with opening, preferably flared 15, of the hollow core wood or honeycomb panel 10 and thus of a board 11 on one side and of the connection element interposed 13 up to inside the other board 12 on the opposite side, preferably with an inner notch 16 of the latter 12;
   arrangement, preferably automatic, of at least one reel or electromagnetic induction solenoid 17 near the perforated face 11 of the hollow core wood or honeycomb panel 1 around the perimeter of the opening 15 of the hole 14, and possibly of at least one homologous reel or solenoid 17 even near the other face 12 at relative positions;
   preferably automatic introduction of the insert 1 into the holes 14 of the relative seat 14 through pressure means made of inert material, at least in the part involved by the electromagnetic field referred to below;
   simultaneous application of an electrical current to the reel or solenoid 17 and ensuing electrostatic induction on the metallic elements of the insert 1 and relative Joule effect heating by parasite currents;
   heat-activation of the apical layer 5 of heat-meltable or heat-activatable adhesive material arranged on the distal base 4 of the insert 1 and of the top ring-like layer 7 of heat-meltable or heat-activatable adhesive material arranged beneath the proximal flaring or collar 6 of the insert 1;
   welding or gluing the distal base 4 of the insert 1 in the non-perforated board 12, preferably only notched 16 to facilitate the welding or gluing, and the collar 6 of the insert 1 into the flared opening 15 of the seat 14 on the perforated board 11;
   termination of the introduction pressure with the remainder of the insert 1 firmly fixed to the boards 11 and 12, or elements with higher mechanical resistance of the panel structure 10.

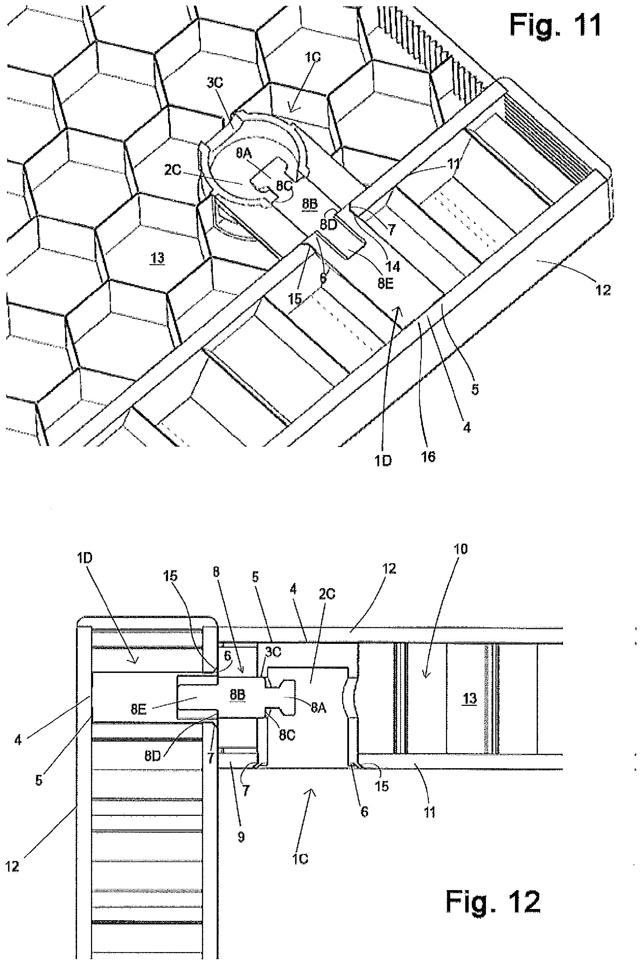

The inserts for fasteners according to the present invention are also provided with further solutions for increasing the firmness of the joint, or rather, for optimising the forces discharged thereof to the advantage of firmness:
as a matter of fact, as represented in figures 11 and 12, the fastener 8 which connects the insert 1C to the insert 1D abuts with a foot annular relief 8D thereof exclusively against the collar 6 of the insert 1D, without extending beyond the circumference of the latter and interfacing the portion of the board 11 surrounding the holes 14 of the seat, and without exclusively interfacing the board 1;
the spacer 9, which fits the insert 1C, in turn abuts the crown of the collar 6 of the insert 1D, and though extending beyond the circumference thereof to interface the portion of the board 11 surrounding the holes 14 of the seat, it does not exclusively interface the board 11.

This structuring averts an extractor effect on the insert 1D and shields the insert 1C against the traction of the fastener 8, so that the joint fastening force is exclusively discharged between the inserts 1C and 1D, without reducing the adhesive resistance of the insert 1D in the relative seat 14.

### Alternative embodiments

It is obvious that the alternative embodiments, still falling within the innovative concept of the embodiment illustrated above and claimed below, the method the method and structure of inserts for applying metalware to hollow core wood panels according to the present invention shall also be implemented and obtained differently, through equivalent technical and mechanical solutions same case applying to the relative procedural steps may vary in a manner suitable for the purpose;
In particular:
the apical layer the material that can he heat-melted on the base of the inserts and the layer of ring-like material that can be heat activated beneath the collar thereof may be made of any thermoplastic material or thermo-adhesive material suitable for the purpose.

The method and structure of inserts for applying metalware to hollow core wood panels in the industrial production of furniture according to the present invention imply making the insert adhesive at least on the bottom and beneath the collar; however, the adhesive may also be practically provided on the entire insert, covering - with thermoplastic or thermo-adhesive material - the entire relative surface through electrostatic powder treatment and subsequent casting, or by emersion, or by electrophoresis or by any other technique deemed suitable for the purpose.

The presence and activation of the second reels or solenoids facing the non-perforated face of the panel is provided for: in case the thickness of the panel or any other factor does not allow suitable electromagnetic induction in the field of the second face of the panel.

The reels or solenoids may obviously be structured to attain the electromagnetic induction power suitable for the purpose.

The sandwich forming the hollow core wood panel, may comprise a connection element variously structured and made of material different from the usual and preferred honeycomb material illustrated by way of example.

### Advantages of the invention

As observable from the preceding detailed description of a preferred embodiment, the method and as mentioned regarding some variant embodiments, the method and structure of inserts for applying metalware to hollow core wood panels according to the present invention offers advantages corresponding to the attainment of these and other preset objects. as a matter of fact, supplements a functional, polyvalent, quick and inexpensive method adapted to provide points for fastening to the support metalware, mounting and service in hollow core wood or honeycomb panels for the relative use in the furnishing industry so as to allow the use thereof in this industry without the main drawback which represents a limit thereof according to the prior art.

### KEY TO THE REFERENCE NUMBERS

1A) screw insert
1B) fastener insert
1C) eccentric fastener insert
1D) fastener foot insert
2A) internal cavity with radial septa of the screw insert
2) internal cavity of the fastener insert
2C) internal cavity of the eccentric fastener insert
2D) internal cavity of the fastener foot insert
3A) radial septa of the screw insert
3B) transversal holes of the fastener insert
3C) transversal holes of the eccentric fastener insert
4) distal base of the inserts
5) apical layer made of material that can be heat melted on the distal base of the inserts
6) shaped proximal collar with outward flaring of the inserts
7) top ring-like layer of material that can be heat-melted beneath the collar of the inserts
8) fastener in its entirety
8A) fastener head
8B) median cylindrical expansion of the fastener
8C) annular relief defining at the head the median cylindrical expansion of the fastener
8D) annular relief defining at the foot the median cylindrical expansion of the fastener
8E) fastener foot
9) spacer
10) panel in its entirety
11) perforated board of the panel
12) non-perforated board of the panel
13) honeycomb structure
14) seats or holes for the inserts
15) flared opening of the seats or holes of the inserts
16) inner notch of the non-perforated board
17A) upper solenoids
17B) lower solenoids

## Claims

1. Method in the industrial production of furniture for the application of metalware to hollow-cored wood panels of the sandwich type made up of external sheets or boards of materials with relatively high mechanical resistance, typically made of wood or wood surrogates, mutually interspaced and rigidly connected through a structural adhesive to an interposed connection element with light characteristics, typically of the honeycomb type, plastic or aluminium, **characterised in that** it comprises: insert elements (1) preferably cylindrical, at least partly metallic, designed for interacting with screws, fasteners and joining means with metalware and support accessories, mounting and services, structured with at least one distal base (4) and a proximal collar (6) associated with a thermo-activatable adhesive means (5, 7); creation of seats (14) for the insert elements (1) by perforating the hollow-cored wood or honeycomb panel (10) and thus a board (11) on one side and connecting material (13) interposed up to the inside of the other board (12) on the opposite side; arranging electromagnetic inducer means (17A) near the perforated face of the board (11) of said panel (10) proximal or rather around the opening (15) of the seat (14), and possibly homologous electromagnetic inducer means (17B) near the opposite face of the other board (12) at relative positions; introducing the insert element (1) into the holes of the relative seat (14); pressing the insert element (1) into said seat (14) through pressure means made of inert material; simultaneous application of an electric current to the electromagnetic inducer means (17A) and ensuing electrostatic induction on the metallic insert elements (1) with relative heating; activation of the thermo-activatable adhesive means (5, 7) arranged on the distal base (4) and on the proximal collar (6); welding the distal base (4) of the insert element (1) in the non-perforated board (12) and the collar (6) of the insert element (1) to the opening (15) of the seat (14) on the perforated board (11) so that the insert element (1) is integrally anchored to both external sheets of resistant material.

2. Method according to claim 1 **characterised in that** the seat (14) in the board (11) for the insert elements (1) has a flared opening (15) whereas on the opposite side the non-perforated other board (12) has an inner notch (16), wherein at least one reel or electromagnetic induction solenoid (17A) is arranged near the perforated board (11) of the panel (10) around the opening (15) of the seat (14) and possibly at least one homologous reel or solenoid (17B) at relative position near the other board (12); pressing the insert element (1) into the relative seat (14) and welding the distal base (4) of the insert element (1) in the non-perforated board (12) and the proximal collar (6) of the insert element (1) in the flared opening (15) of the seat (14) on the perforated board (11).

3. Method according to claim 1 or 2, **characterised in that** it comprises:
- providing for insert elements (1) at least partly metallic and preferably cylindrical, designed for interacting with screws, conical screws, fasteners, eccentric fasteners and with joining means with metalware and support, mounting and service accessories, structured with a distal base (4) and a proximal collar (6) constituted by a proximal external flaring with respect to the direction of insertion;
- providing at least one apical layer (5) of heat-meltable or heat-activatable adhesive material arranged on the distal base (4) of said insert element (1), firmly applied thereto;
- providing at least one top ring-like layer (7) of heat-meltable or heat-activatable adhesive material arranged beneath the proximal external flaring of said insert element (1), firmly applied thereto;
- creation, preferably automatic, of the seats (14) for the insert elements (1) by perforating with preferably flared opening (15) of the panel (10) and thus of a board (11) on one side and of the interposed connection material (13) up to the inside of the other board (12) on the opposite side, preferably with an inner notch (16) of said board (12);
- arrangement, preferably automatic, of at least one reel or electromagnetic induction solenoid (17A) near the perforated board (11) of the panel (10) around the perimeter of the opening (15) of the seat (14), and possibly of at least one homologous reel or solenoid (17B) at relative positions near the other board (12);
- introduction, preferably automatic, of the insert element (1) into the holes of the relative seat (14), preferably through pressure means referred to below;
- pressing the insert element (1) into the hole of the relative seat (14) through pressure means made of inert material, at least in the part involved by the electromagnetic field referred to below;
- simultaneous application of an alternating electric current of suitable frequency to the reel or solenoid (17) and ensuing electrostatic induction on the metallic elements of the insert element (1) and relative Joule effect heating by parasite currents;
- heat-activation of the apical layer (5) of heat-meltable or heat-activatable adhesive material arranged on the distal base (4) of the insert element (1) and of the top ring-like layer (7) arranged beneath the proximal flaring collar (6) of the insert element (1);
- welding or gluing the distal base (4) of the insert element (1) in the non-perforated board (12), preferably only notched (16) to facilitate the welding or gluing, and the collar (6) of the insert element (1) into the flared opening of the seat (14);
- termination of the introduction pressure with the remainder of the insert element (1) firmly fixed to the panels (11, 12) with higher mechanical resistance of the panel structure (10).

4. Insert element (1) suitable for the implementation of the method for the application of metalware to hollow-cored wood panels according to any one of the preceding claims, comprising metallic or partly metallic and preferably cylindrical inserts (1) designed for interacting with screws, conical screws, fasteners, eccentric fasteners and with joining means with metalware and support accessories, mounting and service, having a distal base (4) and a proximal collar (6) **characterised in that**
- on said at least partly metallic distal base (4) of said insert element (1) there is applied an apical layer (5) of heat-meltable or heat-activatable adhesive material,
- beneath the at least partly metallic proximal collar (6) of said insert (1) and constituted by a proximal external flaring with reference to the direction of insertion there is applied a top ring-like layer (7) of heat-meltable or heat-activatable adhesive material.

5. Insert element (1) according to claim 4, **characterised in that** said insert (1D) defines an inner cavity (2D) for the insertion of a foot (8E) of a fastening element (8) shaped with a median expansion (8B) defined towards the foot (8E) by an annular relief (8D) which exclusively abuts against the collar (6) of the insert (1D) without expanding beyond the perimeter thereof.

6. Insert elements (1) according to claim 4 or 5, **characterised in that** a first insert (1C) defines an inner cavity (2C) adapted to house a traction eccentric communicating with at least one transverse hole (3C) made on the jacket for the insertion of said fastening element (8) whose head (8A) is engaged by said traction eccentric and whose foot (8E) is inserted into the inner cavity (2D) of a second insert (1D); said fastening element (8) being wrapped by a spacer (9) which - on one side - fits and holds the jacket of said first insert (1C) and - on the other side - abuts at least one portion of the collar (6) of said second insert (1D).

## Patentansprüche

1. Verfahren bei der industriellen Herstellung von Möbeln für die Anwendung von Metallwaren auf hohlräumige Holzplatten vom Sandwich-Typ, hergestellt aus externen Platten oder Brettern aus Materialien mit relativ hoher mechanischer Festigkeit, typischerweise hergestellt aus Holz oder Holzersatz, voneinander mit Abstand angeordnet und starr durch einen Konstruktionsklebstoff mit einem eingeschobenen Verbindungselement mit leichten Merkmalen verbunden, typischerweise vom Typ Honigwaben, Kunststoff oder Aluminium, **gekennzeichnet dadurch, dass** es umfasst:
Einsatzelemente (1), die vorzugsweise zylindrisch sind, zumindest teilweise metallisch, ausgelegt zum Wechselwirken mit Schrauben, Befestigungsmitteln und Verbindungsmitteln mit Metallwaren und Stützzubehör, Befestigung und Einrichtungen, strukturiert mit mindestens einer distalen Basis (4) und einem proximalen Kranz (6), der mit einem thermisch aktivierbaren Klebemittel (5, 7) verbunden ist; Erzeugung von Sitzen (14) für die Einsatzelemente (1) durch Perforieren der hohlräumigen Holz- oder Honigwaben-Platte (10) und daher ein Brett (11) auf einer Seite und Verbindungsmaterial (13), das bis zur Innenseite des anderen Brettes (12) auf der entgegengesetzten Seite eingeschoben ist;
Anordnen von elektromagnetischen Induziermitteln (17A) nahe der perforierten Fläche des Brettes (11) der Platte (10) proximal oder vielmehr rund um die Öffnung (15) des Sitzes (14), und möglicherweise homologe elektromagnetische Induziermittel (17B) nahe der gegenüberliegenden Fläche des anderen Brettes (12) an relativen Positionen; Einführen des Einsatzelementes (1) in die Löcher des entsprechenden Sitzes (14); Pressen des Einsatzelementes (1) in den Sitz (14) durch Druckmittel, die aus inertem Material hergestellt sind;
gleichzeitige Anwendung eines elektrischen Stroms auf das elektromagnetische Induziermittel (17A) und Verfolgen der elektrostatischen Induktion auf die metallischen Einsatzelemente (1) bei relativer Erwärmung; Aktivieren der thermisch aktivierbaren Klebemittel (5, 7), die auf der distalen Basis (4) und auf dem proximalen Kranz (6) angeordnet sind; Anschweißen der distalen Basis (4) des Einsatzelementes (1) im nicht-perforierten Brett (12) und dem Kranz (6) des Einsatzelementes (1) an die Öffnung (15) des Sitzes (14) auf dem perforierten Brett (11), sodass das Einsatzelement (1) integral an beiden externen Platten von widerstandsfähiger Material verankert ist.

2. Verfahren nach Anspruch 1, **dadurch gekennzeichnet, dass** der Sitz (14) im Brett (11) für die Einsatzelemente (1) eine konisch erweiterte Öffnung (15) hat, während auf der entgegengesetzten Seite das nicht-perforierte andere Brett (12) eine Innenkerbe (16) hat, wobei mindestens eine Spule oder elektromagnetische Induktionsspule (17A) in der Nähe des perforierten Brettes (11) der Platte (10) und um die Öffnung (15) des Sitzes (14) angeordnet ist, und möglicherweise mindestens eine homologe Spule oder Induktionsspule (17B) an einer relativen Position in der Nähe des anderen Brettes (12); Pressen des Einsatzelementes (1) in den zugehörigen Sitz (14) und Schweißen der distalen Basis (4) des Einsatzelementes (1) im nicht-perforierten Brett (12) und dem proximalen Kragen (6) des Einsatzelementes (1) in der konisch erweiterten Öffnung (15) des Sitzes (14) auf dem perforierten Brett (11) .

3. Verfahren nach Anspruch 1 oder 2, **dadurch gekennzeichnet, dass** es umfasst:
- Bereitstellen von Einsatzelementen (1), die zumindest teilweise metallisch und vorzugsweise zylindrisch sind, konstruiert für die Wechselwirkung mit Schrauben, kegelförmigen Schrauben, Befestigungsmitteln, exzentrischen Befestigungsmitteln und mit Verbindungsmitteln mit Metallkonstruktionen und Stütze, Befestigungs- und Service-Zubehör, strukturiert mit einer distalen Basis (4) und einem proximalen Kragen (6), gebildet durch eine proximale externe Aufweitung mit Bezug auf die Einführungsrichtung;
- Bereitstellen von mindestens einer Spitzenschicht (5) des wärmeschmelzbaren oder wärmeaktivierbaren Klebematerials, das auf der distalen Basis (4) des Einsatzelementes (1) angeordnet ist, fest darauf aufgetragen;
- Bereitstellen von mindestens einer oberen ringartigen Schicht (7) des wärmeschmelzbaren oder wärmeaktivierbaren Klebematerials, das unterhalb der proximalen externen Aufweitung des Einsatzelementes (1) angeordnet ist, fest darauf aufgetragen;
- Erzeugung, vorzugsweise automatisch, der Sitze (14) für die Einsatzelemente (1) durch Perforieren der Platte (10) mit einer vorzugsweise aufgeweiteten Öffnung (15) und daher eines Brettes (11) auf einer Seite und des eingesetzten Verbindungsmaterials (13) bis zur Innenseite des anderen Brettes (12) auf der entgegengesetzten Seite, vorzugsweise mit einer Innenkerbe (16) des Brettes (12);
- Anordnung, vorzugsweise automatisch, von mindestens einer Spule oder elektromagnetischen Induktionsspule (17A) in der Nähe des perforierten Brettes (11) der Platte (10) und um den Umfang der Öffnung (15) des Sitzes (14), und möglicherweise von mindestens einer homologen Spule oder Induktionsspule (17B) an entsprechenden Positionen in der Nähe des anderen Brettes (12);
- Einführung, vorzugsweise automatisch, des Einsatzelementes (1) in die Löcher des entsprechenden Sitzes (14), vorzugsweise durch Druckmittel, auf die unten verwiesen wird;
- Pressen des Einsatzelementes (1) in das Loch des entsprechenden Sitzes (14) durch Druckmittel, die aus inertem Material hergestellt sind, zumindest teilweise eingebunden durch das elektromagnetische Feld, das unten erwähnt wird;
- gleichzeitiges Anwenden eines elektrischen Wechselstroms geeigneter Frequenz auf die Spule oder Induktionsspule (17) und Verfolgen der elektrostatischen Induktion in den metallischen Elementen des Einsatzelementes (1) und der entsprechenden Joule-Effekt-Erwärmung durch parasitische Ströme;
- Wärmeaktivierung der Spitzenschicht (5) des wärmeschmelzbaren oder wärmeaktivierbaren Klebematerials, das auf der distalen Basis (4) des Einsatzelementes (1) angeordnet ist, und der oberen ringähnlichen Schicht (7), die unter dem proximalen sich aufweitenden Kragen (6) des Einsatzelementes (1) angeordnet ist;
- Schweißen oder Kleben der distalen Basis (4) des Einsatzelementes (1) im nicht-perforierten Brett (12), vorzugsweise nur gekerbt (16), um das Schweißen oder Kleben zu erleichtern, und des Kragens (6) des Einsatzelementes (1) in die aufgeweitete Öffnung des Sitzes (14);
- Beendigung des Einsatzdrucks beim Rest des Einsatzelementes (1), das fest an den Platten (11, 12) mit höherer mechanischer Beständigkeit der Plattenstruktur (10) befestigt ist.

4. Einsatzelement (1), das sich für die Implementierung des Verfahrens für die Anwendung von Metallkonstruktionen auf hohlkernige Holzplatten eignet, das metallische oder teilweise metallische und vorzugsweise zylindrische Einsätze (1) umfasst, die zur Wechselwirkung mit Schrauben, kegelförmigen Schrauben, Befestigungsmitteln, exzentrischen Festigungsmitteln und mit Verbindungsmitteln mit Metallkonstruktionen und Stützzubehör, Befestigung und Service ausgelegt sind, das eine distale Basis (4) und einen proximalen Kragen (6) hat, **dadurch gekennzeichnet, dass**
auf der mindestens teilweise metallischen distalen Basis (4) des Einsatzelementes (1) eine Spitzenschicht (5) aus wärmeschmelzbarem oder wärmeaktivierbarem Klebematerial aufgetragen wird,
unterhalb des zumindest teilweise metallischen proximalen Kragens (6) des Einsatzes (1) und gebildet durch eine proximale externe Aufweitung mit Bezug auf die Richtung der Einführung wird eine obere ringartige Schicht (7) aus wärmeschmelzbarem oder wärmeaktivierbarem Klebematerial aufgetragen.

5. Einsatzelement (1) nach Anspruch 4, **dadurch gekennzeichnet, dass** der Einsatz (1D) einen inneren Hohlraum (2D) für das Einsetzen eines Fußes (8E) eines Befestigungselementes (8) definiert, das mit einer mittleren Erweiterung (8B) geformt ist, die zum Fuß (8E) hin durch ein ringförmiges Relief (8D) definiert ist, welches allein gegen den Kragen (6) des Einsatzes (1D) angrenzt, ohne sich über den Umfang desselben hinaus zu erweitern.

6. Einsatzelemente (1) nach Anspruch 4 oder 5, **dadurch gekennzeichnet, dass** ein erster Einsatz (1C) einen inneren Hohlraum (2C) definiert, der dafür ausgelegt ist, einen Antriebsexzenter aufzunehmen, der mit mindestens einer Querbohrung (3C) kommuniziert, die in der Ummantelung für das Einführen des Befestigungselshöhlungementes (8) hergestellt ist, dessen Kopf (8A) im Eingriff mit dem Antriebsexzenter steht und dessen Fuß (8E) in den inneren Hohlraum (2D) eines zweiten Einsatzes (1D) eingeführt wird; wobei das Befestigungselement (8) durch ein Abstandselement (9) umhüllt wird, das - auf einer Seite - passt und die Ummantelung des ersten Einsatzes (1C) hält und - auf der anderen Seite - an mindestens einen Teil des Kragens (6) des zweiten Einsatzes (1D) grenzt.

## Revendications

1. Procédé de production industrielle de meubles pour l'application d'éléments métalliques sur des panneaux en bois à noyau creux de type sandwich composés de feuilles externes ou de plaques de matériau dotées d'une résistance mécanique relativement élevée, composées typiquement de bois ou de substituts de bois, espacées mutuellement et connectées rigidement par un adhésif structurel pour former un élément de connexion interposé doté de caractéristiques lumineuses, typiquement de plastique ou d'aluminium de type nid d'abeilles, **caractérisé en ce qu'**il comprend : des éléments inserts (1) de préférence cylindriques, au moins partiellement métalliques, conçus pour interagir avec des vis, des attaches et des moyens d'assemblage dotés de moyens de montage et d'entretien d'éléments métalliques et d'accessoire supports, conçus avec au moins une base distale (4) et une collerette proximale (6) associée à un moyen adhésif thermoactivable (5, 7) ; création de sièges (14) pour les éléments inserts (1) en perforant le bois à noyau creux ou le panneau en nid d'abeilles (10) et ainsi une plaque (11) sur une face et du matériel de connexion (13) interposé jusqu'à l'intérieur de l'autre plaque (12) sur la face opposée ; disposition de moyens d'induction électromagnétiques (17A) près de la face perforée de la plaque (11) dudit panneau (10) proximal ou plutôt autour de l'ouverture (15) du siège (14), et des moyens d'induction électromécanique éventuellement homologues (17B) près de la face opposée de l'autre plaque (12) à des positions relatives ; introduction de l'élément insert (1) dans les trous du siège relatif (14) ; compression de l'élément insert (1) dans ledit siège (14) par des éléments de compression composés de matériau inerte ; application simultanée d'un courant électrique au moyen d'induction électromagnétique (17A) suivie d'une induction électrostatique sur les éléments inserts métalliques (1) avec un chauffage relatif ; activation du moyen adhésif thermoactivable (5, 7) disposé sur la base distale (4) et sur la collerette proximale (6) ; soudage de la base distale (4) de l'élément insert (1) dans la plaque non perforée (12) et la collerette (6) de l'élément insert (1) sur l'ouverture (15) du siège (14) sur la plaque perforée (11) de manière à ce que l'élément insert (1) soit ancré intégralement dans les deux feuilles externes de matériau résistant.

2. Procédé selon la revendication 1, **caractérisé en ce que** le siège (14) situé dans la plaque (11) pour les éléments inserts (1) a une ouverture évasée (15) tandis que, sur la face opposée, l'autre plaque non perforée (12) comporte une entaille interne (16), au moins un rouleau ou un solénoïde à induction électromagnétique (17A) étant disposé près de la plaque perforée (11) du panneau (10) autour de l'ouverture (15) du siège (14) et éventuellement au moins un rouleau ou solénoïde homologue (17B) à une position relative près de l'autre plaque (12) ; sachant qu'il y a une compression de l'élément insert (1) dans le siège relatif (14) et un soudage de la base distale (4) de l'élément insert (1) dans la plaque non perforée (12) et de la collerette proximale (6) de l'élément insert (1) dans l'ouverture évasée (15) du siège (14) sur la plaque perforée (11).

3. Procédé selon la revendication 1 ou 2, **caractérisé en ce qu'**il comprend :
- la prévision d'éléments inserts (1) au moins partiellement métalliques et de préférence cylindriques, conçus pour interagir avec des vis, des vis coniques, des attaches, des attaches excentriques et avec des moyens d'assemblage avec des éléments en métal et des accessoires de support, de montage et d'entretien, conçus avec une base distale (4) et une collerette proximale (6) constituée par un élargissement externe proximal par rapport au sens d'insertion ;
- prévision d'au moins une couche apicale (5) de matériau adhésif thermofusible ou thermoactivable disposé sur la base distale (4) dudit élément insert (1) et fermement appliquée dessus ;
- prévision d'au moins une couche supérieure de type annulaire (7) de matériau adhésif thermofusible ou thermoactivable disposé en dessous de l'élargissement externe proximal dudit élément insert (1) et fermement appliquée dessus ;
- création, de préférence automatique, des sièges (14) pour les éléments inserts (1) en perforant avec une ouverture de préférence évasée (15) du panneau (10) es ainsi d'une plaque (11) sur une face et du matériau de connexion interposé (13) jusqu'à l'intérieur de l'autre plaque (12) sur la face opposée, de préférence avec une entaille interne (16) de ladite plaque (12) ;
- disposition, de préférence automatique, d'au moins un rouleau ou d'un solénoïde à induction électromagnétique (17A) près de la plaque perforée (11) du panneau (10) autour du périmètre de l'ouverture (15) du siège (14), et éventuellement d'au moins un rouleau ou solénoïde homologue (17B) à des positions relatives près de l'autre plaque (12) ;
- introduction, de préférence automatique, de l'élément insert (1) dans les trous du siège relatif (14), de préférence par des moyens de compression auxquels il est fait référence ci-après ;
- compression de l'élément insert (1) dans le trou du siège relatif (14) par des éléments de pression composés de matériau inerte, au moins dans la partie concernée par le champ électromagnétique auquel il est fait référence ci-après ;
- application simultanée d'un courant électrique alternatif de fréquence adéquate au rouleau ou solénoïde (17), suivie d'une induction électrostatique sur les éléments métalliques de l'élément insert (1) et chauffage à effet Joule relatif par des courants parasites ;
- activation thermique de la couche apicale (5) de matériau adhésif thermofusible ou thermoactivable disposée sur la base distale (4) de l'élément insert (1) et de la couche supérieure de type annulaire (7) disposée en dessous de la collerette évasée proximale (6) de l'élément insert (1) ;
- soudage ou collage de la base distale (4) de l'élément insert (1) dans la plaque non perforée (12), de préférence seulement entaillée (16), pour faciliter le soudage ou le collage et de la collerette (6) de l'élément insert (1) dans l'ouverture évasée du siège (14) ;
- interruption de la pression d'introduction avec le reste de l'élément insert (1) fixé fermement aux panneaux (11,12) avec une résistance mécanique supérieure de la structure de panneau (10).

4. Élément insert (1) adapté pour la mise en oeuvre du procédé d'application d'éléments métalliques sur des panneaux en bois à noyau creux selon l'une quelconque des revendications précédentes, comprenant des inserts (1) métalliques ou partiellement métalliques et de préférence cylindriques conçus pour interagir avec des vis, des vis coniques, des attaches, des attaches excentriques et avec des systèmes de montage et d'entretien d'éléments métalliques et d'accessoire support, comportant une base distale (4) et une collerette proximale (6), **caractérisé en ce que**,
- sur ladite base distale (4) au moins partiellement métallique dudit élément insert (1), est appliquée une couche apicale (5) de matériau adhésif thermofusible ou thermoactivable,
- en-dessous de la collerette proximale (6) au moins partiellement métallique dudit insert (1) et constituée par un élargissement externe proximal par rapport au sens d'insertion, est appliquée une couche supérieure de type annulaire (7) de matériau adhésif thermofusible ou thermoactivable.

5. Élément insert (1) selon la revendication 4, **caractérisé en ce que** ledit insert (1D) définit une cavité interne (2D) pour l'insertion d'un pied (8E) d'un élément de fixation (8) conformé avec une expansion médiane (8B) définie en direction du pied (8E) par un relief annulaire (8D) qui bute exclusivement contre la collerette (6) de l'insert (1D) sans se dilater au-delà de son périmètre.

6. Élément insert (1) selon la revendication 4 ou 5, **caractérisé en ce qu'**un premier insert (1C) définit une cavité interne (2C) apte à abriter un excentrique de traction communiquant avec au moins un trou transversal (3C) pratiqué sur la chemise pour l'insertion dudit élément de fixation (8) dans la tête (8A) duquel s'engage ledit excentrique de traction et dont le pied (8E) est inséré dans la cavité interne (2D) d'un second insert (1D) ; ledit élément de fixation (8) étant enveloppé par un espaceur (9) qui - d'un côté - ajuste et maintient la chemise dudit premier insert (1C) et - de l'autre côté - bute contre au moins une partie de la collerette (6) dudit second insert (1D).
